(19) Europäisches Patentamt
European Patent Office
Office européen des brevets

(11) Veröffentlichungsnummer: **0 025 166**
**A1**

(12) **EUROPÄISCHE PATENTANMELDUNG**

(21) Anmeldenummer: 80105054.3

(22) Anmeldetag: 26.08.80

(51) Int. Cl.$^3$: **C 09 B 1/46**
D 06 P 1/24

(30) Priorität: 29.08.79 CH 7830/79

(43) Veröffentlichungstag der Anmeldung:
18.03.81 Patentblatt 81/11

(84) Benannte Vertragsstaaten:
CH DE FR GB IT LI

(71) Anmelder: CIBA-GEIGY AG
Patentabteilung Postfach
CH-4002 Basel(CH)

(72) Erfinder: Tzikas, Athanassios, Dr.
Muttenzerstrasse 78
CH-4133 Pratteln(CH)

(74) Vertreter: Zumstein sen., Fritz, Dr. et al,
Bräuhausstrasse 4
D-8000 München 2(DE)

(54) **Verfahren zur Herstellung von Küpenfarbstoffen der Anthrachinonreihe, deren Verwendung in Färbe- und Druckpräparaten und beim Färben und Bedrucken.**

(57) Gegenstand der vorliegenden Erfindung ist ein neues Verfahren zur Herstellung von Küpenfarbstoffen der Formel

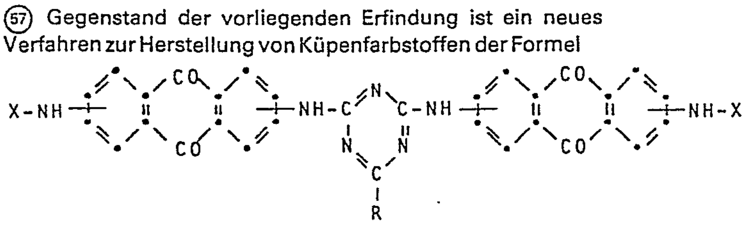 (1),

worin R ein unsubstituierter oder substituierter Alkyl- oder Alkoxyrest mit 1 bis 6 Kohlenstoffatomen, ein unsubstituierter oder substituierter Phenoxy- oder Naphthoxyrest, ein unsubstituierter oder substituierter Rest der Benzol-, Naphthalin- oder-Pyridinreihe, ein unsubstituierter oder substituierter Benzyl-, Phenäthyl- oder Methylennaphthylrest, ein unsubstituierter oder substituierter Morpholin- oder Piperidinrest oder ein unsubstituierter oder substituierter Aminorest ist, und X ein unsubstituierter oder substituierter Acylrest einer aliphatischen Carbonsäure mit 1 bis 6 Kohlenstoffatomen oder einer aromatischen Carbonsäure der Benzol-, Naphthalin-, Pyridin- oder Anthrachinonreihe ist, welches dadurch gekennzeichnet ist, dass man ein Diaminoanthrachinon der Formel

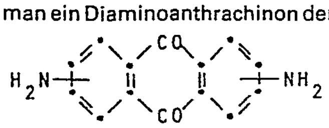 (2),

./...

EP 0 025 166 A1

mit einem 2,4-Dihalogen-s-triazin der Formel

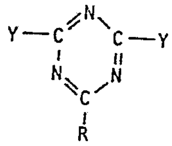

(3),

worin Y Halogen ist und R die unter Formel (1) angegebene Bedeutung hat, im molaren Verhältnis 2:1 kondensiert und das erhaltene Zwischenprodukt der Formel

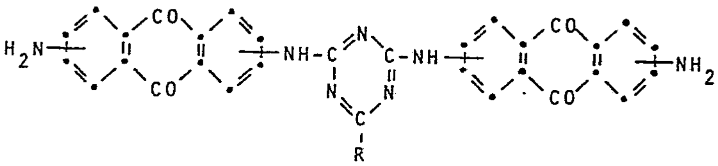

(4),

mit einem Acylierungsmittel, welches den Acylrest X, der die unter Formel (1) angegebene Bedeutung hat, aufweist, im molaren Verhältnis 1:2 kondensiert.

Die Verfahrensprodukte sind wertvolle Küpenfarbstoffe, die auf Baumwolle nach dem Küpenfärbeverfahren echte Färbungen erzeugen.

CIBA-GEIGY AG 1-12495/-

BASEL (SCHWEIZ)

BEZEICHNUNG GEÄNDERT
siehe Titelseite

Verfahren zur Herstellung von Küpenfarbstoffen

Die vorliegende Erfindung betrifft ein Verfahren zur Herstellung von Küpenfarbstoffen der Formel

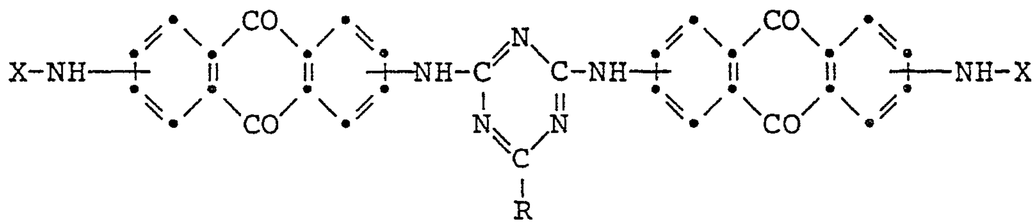

(1),

worin R ein unsubstituierter oder substituierter Alkyl- oder Alkoxyrest mit 1 bis 6 Kohlenstoffatomen, ein unsubstituierter oder substituierter Rest der Benzol-, Naphthalin- oder Pyridinreihe, ein unsubstituierter oder substituierter Benzyl-, Phenäthyl- oder Methylennaphthylrest, ein unsubstituierter oder substituierter Morpholin- oder Piperidinrest oder ein unsubstituierter oder substituierter Aminrest ist, und X ein unsubstituierter oder substituierter Acylrest einer aliphatischen Carbonsäure mit 1 bis 6 Kohlenstoffatomen oder einer aromatischen Carbonsäure der Benzol-, Naphthalin-, Pyridin- oder Anthrachinonreihe ist, welches dadurch gekennzeichnet ist, dass man ein Diaminoanthrachinon der Formel

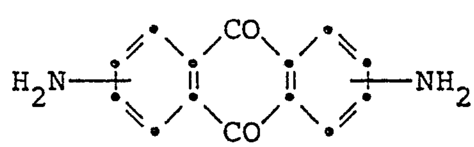

(2),

mit einem 2,4-Dihalogen-s-triazin der Formel

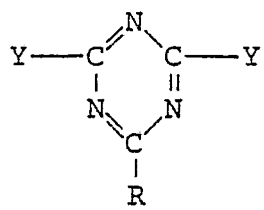

(3),

worin Y Halogen ist und R die unter Formel (1) angegebene Bedeutung hat, im molaren Verhältnis 2:1 kondensiert und das erhaltene Zwischenprodukt der Formel

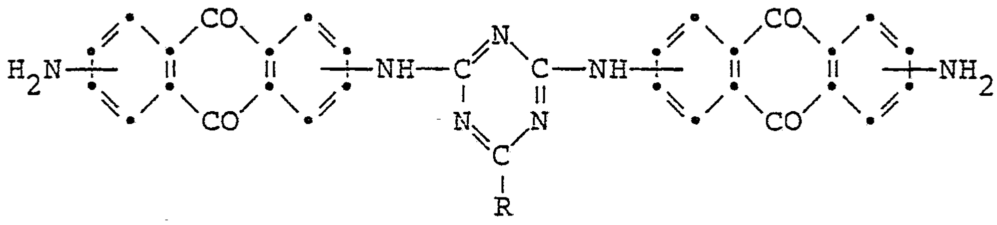

(4),

mit einem Acylierungsmittel, welches den Acylrest X, der die unter Formel (1) angegebene Bedeutung hat, aufweist, im molaren Verhältnis 1:2 kondensiert.

In Formel (1) ist in jedem der beiden Anthrachinonkerne die X-NH-Gruppe an den äusseren Benzolring und das -NH-Brückenglied zum Triazinrest an den inneren Benzolring gebunden. Die X-NH-Gruppe und das -NH-Brückenglied können unabhängig voneinander in α- oder β-Stellung des Anthrachinonkerns stehen.

Als Beispiele für R seien genannt: Diäthylamino, Isopropylamino, Phenylamino, Methyl, Butyl, Benzyl, Phenäthyl, Phenyl, Methoxy, Benzyloxy, Phenoxy, Benzylamino, Naphthyl, Methoxy, Isopropoxy, Pyridyl, Morpholino und Piperidino.

Der Acylrest X ist der Rest einer aromatischen Carbonsäure, insbesondere der Benzolreihe, der durch Brom, Chlor, Nitro, Methyl, Methoxy, Hydroxy, Carboxy u.a. weitersubstituiert sein kann, oder ein Alkanoylrest, der im Alkylteil durch Chlor, Nitro, Phenyl u.a. weitersubstituiert sein kann. Als Beispiele für Acylreste X seien genannt: Benzoyl, p-Chlorbenzoyl, m-Nitrobenzoyl, p-Phenylbenzoyl und Acetyl.

Das als Ausgangsstoff zu verwendende Diaminoanthrachinon der Formel (2) ist bekannt. Ebenfalls bekannt sind die als Ausgangsstoffe zu verwendenden Dihalogen-s-triazine der Formel (3). Als Halogen Y kommen Fluor, Chlor und Brom in Betracht. Als Acylierungsmittel, welche den Acylrest X, der die unter Formel (1) angegebene Bedeutung hat, aufweisen, kommen vor allem Halogenide und Anhydride aromatischer und aliphatischer Carbonsäuren in Betracht. Als Beispiele seien genannt: Benzoylchlorid, p-Chlorbenzoylchlorid, Naphthalin-1-carbonsäurechlorid, Naphthalin-1-carbonsäureanhydrid u.a. bei der weiter unten folgenden Aufzählung möglicher Reaktionskomponenten genannte Verbindungen.

Um bei dem erfindungsgemässen Verfahren die Bildung von Dikondensationsprodukt aus 1 Mol Diaminoanthrachinon und 2 Mol Dihalogen-s-triazin zu vermeiden, ist es erforderlich, die Umsetzung so auszuführen, dass das Diaminoanthrachinon stets im Ueberschuss vorliegt. Man kann dies erreichen, indem man das Diaminoanthrachinon in Lösung oder Suspension vorlegt und das Dihalogen-s-triazin langsam eintropft oder eingiesst. Unter dieser Voraussetzung reagiert das Dihalogen-s-triazin schnell mit 1 Mol Diaminoanthrachinon unter Bildung eines Monokondensationsproduktes und anschliessend mit einem weiteren Mol Diaminoanthrachinon unter Bildung des Zwischenproduktes der Formel (4). Ein Dikondensationsprodukt aus 1 Mol Diaminoanthrachinon und 2 Mol Dihalogen-s-triazin kann bei dieser Ausführungsform nicht mehr entstehen, da einerseits das zweite Halogen am s-Triazinrest viel weniger reaktiv ist als das erste, und andererseits die zweite noch freie $H_2N$-Gruppe am Anthrachinonkern weniger leicht kondensierbar ist. Vorzugsweise führt man die Umsetzung bei erhöhter Temperatur in einem inerten organischen Lösungsmittel aus. Dabei richtet sich die Reaktionstemperatur im wesentlichen nach dem Siedepunkt des Lösungsmittels. Als inerte organische Lösungsmittel kommen vorzugsweise Nitrobenzol und o-Dichlorbenzol in Betracht. Um die Kondensation zwischen dem Dihalogen-s-triazin und dem Diaminoanthrachinon vollständig zu machen ist es zweckmässig einen Kondensationskatalysator, z.B. Pyridin, der Lösung hinzuzufügen. Die Umsetzung des Zwischenproduktes der Formel (4) mit dem Acylierungsmittel, welches den Acylrest X aufweist, erfolgt ebenfalls bei erhöhter Temperatur und vorzugsweise in dem gleichen Lösungsmittel wie die Kondensation zwischen dem Dihalogen-s-triazin und dem Diaminoanthrachinon. Gegebenenfalls wird das Acylierungsmittel zusammen mit einem Kondensationskatalysator in die Reaktionsmischung gegeben.

Eine bevorzugte Ausführungsform des erfindungsgemässen Verfahrens ist somit dadurch gekennzeichnet, dass man bei erhöhter Temperatur das Dihalogen-s-triazin, in einem inerten organischen Lösungsmittel gelöst, mit geringer Geschwindigkeit zu der Lösung oder Suspension des Diaminoanthrachinons in einem inerten organischen Lösungsmittel zugibt, anschliessend, wenn alles Dihalogen-s-triazin zugegeben ist und die Kondensation nahezu vollständig ist, einen Kondensationskatalysator zufügt und die Kondensation abschliesst und zuletzt das Acylierungsmittel gegebenenfalls zusammen mit einem Kondensationskatalysator in die Reaktionsmischung gibt und die Kondensation zu Ende führt.

Dabei verwendet man als inerte organische Lösungsmittel vorzugsweise Nitrobenzol oder o-Dichlorbenzol.

Als Ausgangsstoffe, die zur Herstellung der Küpenfarbstoffe der Formel (1) nach dem erfindungsgemässen Verfahren verwendet werden können, seien genannt:

Diaminoanthrachinone der Formel (2)

1,5-Diaminoanthrachinon, 1,8-Diaminoanthrachinon,
1,7-Diaminoanthrachinon, 1,6-Diaminoanthrachinon,
2,6-Diaminoanthrachinon, 2,7-Diaminoanthrachinon.

2,4-Dihalogen-s-triazine der Formel (3)

2,4-Dichlor-6-methyl-s-triazin,
2,4-Dichlor-6-äthyl-s-triazin,
2,4-Dichlor-6-allyl-s-triazin,
2,4-Dichlor-6-benzyl-s-triazin,
2-Phenyl-4,6-dichlor- oder dibrom-1,3,5-triazin,
2-p-Methoxyphenyl-4,6-dichlor-1,3,5-triazin,
2-p-Chlorphenyl-4,6-dichlor-1,3,5-triazin,
2-p-Methylphenyl-4,6-dichlor-1,3,5-triazin,
2-α- oder -β-Naphthyl-4,6-dichlor-1,3,5-triazin,
2-(4-Methoxynaphth-1-yl)-4,6-dichlor-1,3,5-triazin,
2-o-Hydroxyphenyl-4,6-dichlor-1,3,5-triazin,
2-o-Methoxyphenyl-4,6-dichlor-1,3,5-triazin,
2-o-Chlorphenyl-4,6-dichlor-1,3,5-triazin,
2-o-Methylphenyl-4,6-dichlor-1,3,5-triazin,
2-(2'-Hydroxynaphth-1'-yl)-4,6-dichlor-1,3,5-triazin,
2-(2'-Hydroxy-6'-brom-naphth-1'-yl)-4,6-dichlor-1,3,5-triazin,
2-Pyrenyl-4,6-dichlor-1,3,5-triazin,
2-(4'-Pyridyl)-4,6-dichlor-1,3,5-triazin,
2-(2',4'-Dichlorphenyl)-4,6-dichlor-1,3,5-triazin,
2-p-Hydroxyphenyl-4,6-dichlor-1,3,5-triazin.

Die Monokondensationsprodukte von 2,4,6-Trifluor-s-triazin (Cyanurfluorid), 2,4,6-Trichlor-s-triazin (Cyanurchlorid) und 2,4,6-Tribrom-s-triazin (Cyanurbromid) mit einer der folgenden Verbindungen:

Ammoniak, Methylamin, Dimethylamin, Aethylamin, Diäthylamin, Propylamin, Isopropylamin, Butylamin, Dibutylamin, Isobutylamin, sek.-Butylamin, Tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin, 3-Nitro-4-methylanilin, o-, m- und p-Anisidin, o-, m- und p-Phenetidin, Naphthylamin-(1), Naphthylamin-(2), 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin, 2-, 3- und 4-Aminopyridin, 2-Aminobenzthiazol, 5-, 6- und 8-Aminochinolin, 2-Aminopyrimidin, Morpholin, Piperidin, Piperazin, Phenol, o-, m- und p-Chlorphenol, o-, m- und o-Nitrophenol, 4-Methylphenol, 4-Methoxyphenol, α-Naphthol, β-Naphthol, 6-Nitro-2-naphthol, Methanol, Aethanol, Propanol, Isopropanol, n-Butanol, Isobutanol, sek.-Butanol, tert.-Butanol, Hexanol, Cyclohexanol, β-Methoxy-äthanol, β-Aethoxy-äthanol, γ-Methoxy-propanol, γ-Aethoxy-propanol, β-Aethoxy-β-äthoxy-äthanol, Benzylalkohol, Phenäthylalkohol, 2,4-Dichloranilin, o-, m- und p-Isopropylanilin, 2,4-Dichlorphenol, N-Isopropyl-N-benzylamin.

Acylierungsmittel, welche den Acylrest X aufweisen:

Acetylchlorid, Acetanhydrid, Propionsäurechlorid, Propionsäureanhydrid, Buttersäurechlorid, Acetylbromid, Acrylsäurechlorid, Acrylsäureanhydrid, Crotonsäureanhydrid, Chloressigsäurechlorid, Chloressigsäureanhydrid, β-Chlorpropionsäurechlorid, γ-Chlorbuttersäurechlorid, Benzoylchlorid, Benzoe-

säurechlorid, Chloressigsäureanhydrid, ß-Chlorpropionsäurechlorid, γ-Chlorbuttersäurechlorid, Benzoylchlorid, Benzoesäureanhydrid, o-, m- und p-Chlorbenzoylchlorid, Benzoylbromid, Benzoylfluorid, m- und p-Nitrobenzoylchlorid, p- und o-Hydroxybenzoylchlorid, p-Phenylbenzoylchlorid, Chlorphenoxyessigsäurechlorid, Phenylessigsäurechlorid, o-, m- und p-Toluylsäurechlorid, Naphthalin-1-carbonsäurechlorid, Naphthalin-2-carbonsäurechlorid, Naphthalin-1-carbonsäureanhydrid, Naphthalin-2-carbonsäureanhydrid, 2,3-Hydroxynaphthoesäurechlorid, 2-Hydroxyanthracen-3-carbonsäurechlorid, Anthrachinon-1-carbonsäurechlorid, Anthrachinon-2-carbonsäurechlorid, Anthrachinon-1-carbonsäureanhydrid, Anthrachinon-2-carbonsäureanhydrid, 1-Aminoanthrachion-2-carbonsäurechlorid, Nicotinsäurechlorid, Isophthalsäurechlorid, Terephthalsäurechlorid, 4-Methylsulfonylbenzolcarbonsäurechlorid, Picolinsäurechlorid, Isonicotinsäurechlorid, 2,4-Dichlorbenzoylchlorid, o-, m- und p-Methyoxybenzoylchlorid und o-, m- und p-Brombenzoylchlorid.

Statt eines einheitlichen Diaminoanthrachinons der Formel (2) kann man auch eine Mischung von Diaminoanthrachinonen verwenden, z.B. eine Mischung von 1,5-, 1,6- und 1,7-Diaminoanthrachinon. Insbesondere kommen Gemische von Diaminoanthrachinonen in Betracht, wie sie bei der technischen Darstellung der Diaminoanthrachinone durch Dinitrierung von Anthrachinon und anschliessende Reduktion entstehen. Solche Gemische enthalten z.B. ausser den in überwiegender Menge vorhandenen 1,8-, 1,5-, 1,7- und 1,6-Diaminoanthrachinonen noch geringe Mengen 2,7- und 2,8-Diaminoanthrachinon (ß-Isomere) und 1-Aminoanthrachinon, oder sie enthalten ausser 1,6-, 1,8-, 1,7-, 2,6-, 2,7- und 1,5-Diaminoanthrachinon noch geringe Mengen 1-Aminoanthrachinon, 2-Aminoanthrachinon sowie 1-Amino-2-, -4-, -5- und -8-hydroxyanthrachinon.

Das erfindungsgemässe Verfahren weist gegenüber dem Stand der Technik Vorteile auf. Nach der bekannten Herstellungsweise von Küpenfarbstoffen der Formel (1), gemäss der französischen Patentschrift 2.093.381, geht man von acylierten Amino- oder Diaminoanthrachinonen aus, setzt diese mit Trihalogen-s-triazinen im Verhältnis 2:1 um und behandelt das Zwischenprodukt dann mit Hydroxy- oder Mercaptoverbindungen. Nach dem Verfahren der deutschen Patentschriften 390.201 und 399.485 werden Küpenfarbstoffe der Formel (1) durch Umsetzung von Diaminoanthrachinonen mit Trihalogen-s-triazinen und anschliessender Acylierung noch freier Aminogruppen des Zwischenproduktes hergestellt.

Im Gegensatz zu den bekannten Herstellungsweisen entfällt bei dem Verfahren der vorliegenden Erfindung die Isolierung von Zwischenprodukten. Nach der erfindungsgemässen Verfahrensweise treten weniger Nebenprodukte auf und es werden höhere Ausbeuten erzielt. Somit könne die Endprodukte des erfindungsgemässen Verfahrens wirtschaftlicher hergestellt werden, als nach dem vorbekannten Stand der Technik.

Die nach dem erfindungsgemässen Verfahren hergestellten Küpenfarbstoffe der Formel (1) eignen sich zum Färben und Bedrucken der verschiedensten Materialien, insbesondere zum Färben und Bedrucken von Fasern aus natürlicher oder regenerierter Cellulose in Gegenwart von Reduktionsmitteln, wie z.B. Dithionit.

Die erhaltenen Färbungen zeichnen sich durch gute Egalitäten aus. Die Echtheiten sind allgemein sehr gut, insbesondere die Licht-, Wasser-, Chlor- und Sodakochechtheiten. Die erfindungsgemäss erhaltenen Farbstoffe reservieren Polyesterfasern gut oder schmutzen sie Ton-in-Ton an, was sie zum Färben von Mischfasern im Gemisch mit Dispersionsfarbstoffen geeignet macht.

Die erfindungsgemäss erhaltenen Farbstoffe können auch als Pigmente für die verschiedensten Pigmentapplikationen eingesetzt werden, z.B. in feinverteilter Form zum Färben von Kunstseide und Viscose oder Celluloseäthern oder -estern oder von Superpolyamiden bzw. Superpolyurethanen oder Polyestern in der Spinnmasse, sowie zur Herstellung von gefärbten Lacken oder Lackbildner, Lösungen oder Produkten aus Acetylcellulose, Nitrocellulose, natürlichen Harzen oder Kunstharzen, wie Polymerisationsharzen oder Kondensationsharzen, z.B. Aminoplasten, Alkydharzen, Phenoplasten, Polyolefinen, wie Polystyrol, Polyvinylchlorid, Polyäthylen, Polypropylen, Polyacrylnitril, Gummi, Casein, Silikon und Silikonharzen. Ausserdem lassen sie sich vorteilhaft bei der Herstellung von Farbstiften, kosmetischen Präparaten oder Laminierplatten verwenden.

In den nachfolgenden Beispielen bedeuten die Teile, sofern nichts anderes angegeben ist, Gewichtsteile, die Prozente Gewichtsprozente, und die Temperaturen sind in Celsiusgraden angegeben. Gewichtsteile stehen zu Volumteilen wie Gramm zu Milliliter.

Beispiel 1

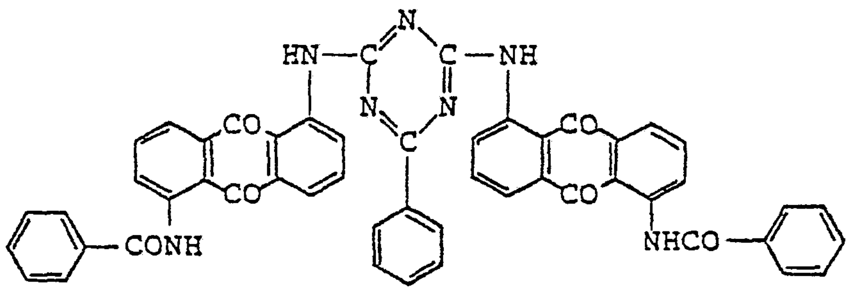

47,6 Teile 1,5-Diaminoanthrachinon werden in 600 Teilen destilliertem Nitrobenzol bei Raumtemperatur suspendiert. Die Suspension wird auf 140° erwärmt, und 22,6 Teile 2,4-Dichlor-6-phenyl-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 3 Stunden bei 140 bis 145° gerührt. Anschliessend werden 0,5 Teile Pyridin zugegeben, und es wird weitere 3 Stunden gerührt. Die Reaktionsmischung wird auf 80° abkühlen gelassen, und es werden 40 Teile Benzoylchlorid und 1 Teil Pyridin zugegeben. Dann wird die Reaktionsmischung aufgeheizt, 3 Stunden bei 140 bis 145° gerührt, dann auf 70 bis 80° abkühlen gelassen und filtriert. Der Rückstand wird gut abgesaugt und mit Aethanol gewaschen bis der Ablauf kein Nitrobenzol mehr enthält. Das Nutschgut wird im Vakuumtrockenschrank bei 100° über Nacht getrocknet.

Ausbeute: 80 Teile Nuance: goldgelb

Beispiel 2

Wird in Beispiel 1 das Benzoylchlorid durch äquivalente Mengen Benzoylbromid, Benzoylfluorid oder Benzoesäureanhydrid ersetzt, so wird der gleiche Farbstoff erhalten.

Beispiel 3

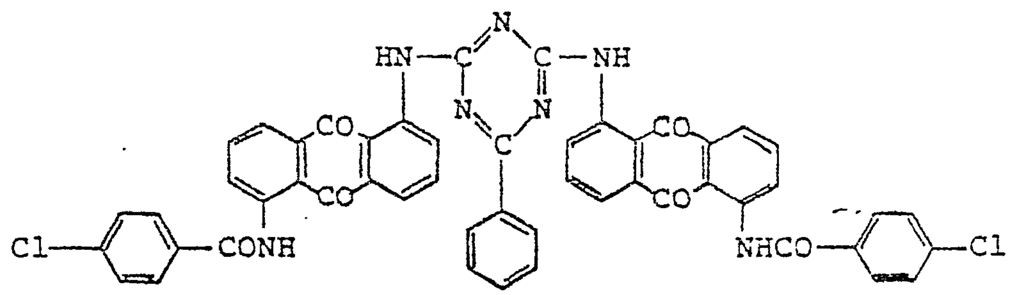

95,2 Teile 1,5-Diaminoanthrachinon werden in 1200 Teilen destilliertem Nitrobenzol bei Raumtemperatur suspendiert. Die Suspension wird auf 140° erwärmt, und 45,2 Teile 2,4-Dichlor-6-phenyl-s-triazin in 480 Teilen destilliertem Nitrobenzol gelöst werden im Laufe von 4 Stunden unter Einleiten von Stickstoff in die Reaktionsmischung bei 140 bis 145° zutropfen gelassen. Dann wird weitere 3 Stunden bei 140 bis 145° gerührt, anschliessend 2 Teile Pyridin zugegeben und weitere 2 Stunden gerührt. Nach Abkühlen der Reaktionsmischung auf 80° werden 90 Teile 4-Chlorbenzoylchlorid und 2 Teile Pyridin zugegeben. Die Reaktionsmischung wird erneut aufgeheizt und 3 Stunden lang bei 140 bis 145° gerührt. Nachdem die Reaktionsmischung auf 70 bis 80° abgekühlt ist wird filtriert. Der Rückstand wird gut abgesaugt und mit Aethanol gewaschen bis der Ablauf frei von Nitrobenzol ist. Das Nutschgut wird im Vakuumtrockenschrank bei 100° über Nacht getrocknet.

Ausbeute: 175 Teile Nuance: goldgelb

Beispiel 4

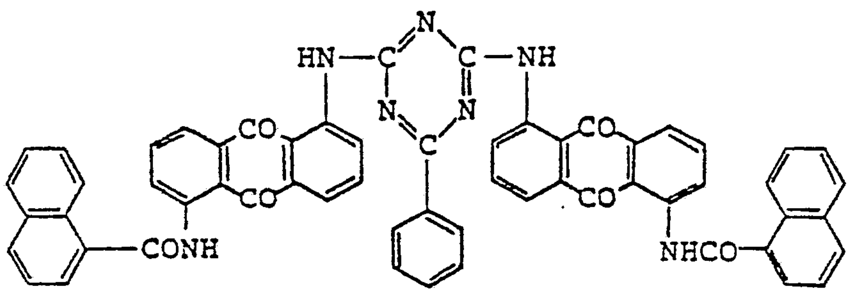

47,6 Teile 1,5-Diaminoanthrachinon werden in 600 Teilen destilliertem Nitrobenzol bei Raumtemperatur suspendiert. Die Suspension wird auf 140° erwärmt, und 22,6 Teile 2,4-Dichlor-6-phenyl-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 4 Stunden bei 140 bis 145° gerührt. Anschliessend wird 1 Teil Pyridin zugegeben, und es wird weitere 2 Stunden gerührt. Die Reaktionsmischung wird auf 80° abkühlen gelassen, und es werden 40 Teile 1-Naphthoylchlorid und 1 Teil Pyridin zugegeben. Dann wird die Reaktionsmischung aufgeheizt, 2 Stunden bei 140 bis 145° gerührt, dann auf 70 bis 80° abkühlen gelassen und filtriert. Der Rückstand wird gut abgesaugt und mit Aethanol gewaschen bis der Ablauf kein Nitrobenzol mehr enthält. Das Nutschgut wird im Vakuumtrockenschrank bei 100° über Nacht getrocknet.

Ausbeute: 94 Teile Nuance: gelbbraun

Dasselbe Produkt erhält man, wenn statt 1-Naphthoylchlorid das Naphthalin-1-carbonsäureanhydrid verwendet wird.

Beispiel 5

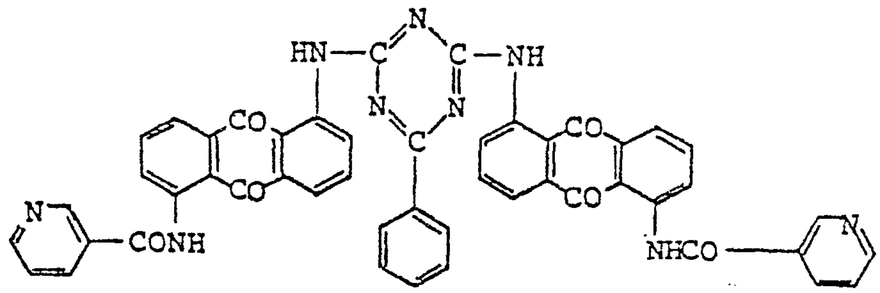

47,6 Teile 1,5-Diaminoanthrachinon werden in 600 Teilen destilliertem Nitrobenzol bei Raumtemperatur suspendiert. Die Suspension wird auf 140° erwärmt, und 22,6 Teile 2,4-Dichlor-6-phenyl-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 2 Stunden bei 140 bis 145° gerührt. Anschliessend werden 0,8 Teile Pyridin zugegeben, und es wird weitere 2 Stunden gerührt. Die Reaktionsmischung wird auf 80° abkühlen gelassen, und es werden 40 Teile Nikontinsäurechlorid und 0,8 Teile Pyridin zugegeben. Dann wird die Reaktionsmischung 3 Stunden bei 75 bis 80° und 2 Stunden bei 130 bis 135° gerührt, dann auf Raumtemperatur abkühlen gelassen und filtriert. Der Rückstand wird gut abgesaugt und mit Aethanol gewaschen bis der Ablauf kein Nitrobenzol mehr enthält. Das Nutschgut wird im Vakuumtrockenschrank bei 100° über Nacht getrocknet.

Ausbeute: 80 Teile Nuance: brillantorange

Beispiel 6

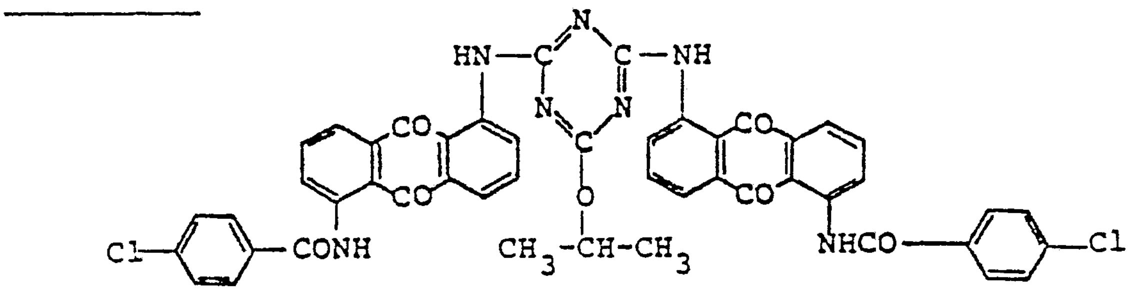

95,2 Teile 1,5-Diaminoanthrachinon werden in 1200 Teilen destilliertem Nitrobenzol bei Raumtemperatur suspendiert. Die Suspension wird auf 140° erwärmt, und 41,6 Teile 2,4-Dichlor-6-isopropoxy-s-triazin in 480 Teilen destilliertem Nitrobenzol gelöst werden im Laufe von 4 Stunden unter Einleiten von Stickstoff in die Reaktionsmischung bei 140 bis 145° zutropfen gelassen. Dann wird weitere 3 Stunden bei 140 bis 145° gerührt, anschliessend 2 Teile Pyridin zugegeben und weitere 2 Stunden gerührt. Nach Abkühlen der Reaktionsmischung auf 80° werden 90 Teile 4-Chlorbenzoylchlorid und 2 Teile Pyridin zugegeben. Die Reaktionsmischung wird erneut aufgeheizt und 3 Stunden lang bei 140 bis 145° gerührt. Nachdem die Reaktionsmischung auf 70 bis 80° abgekühlt ist wird filtriert. Der Rückstand wird gut abgesaugt und mit Aethanol gewaschen bis der Ablauf frei von Nitrobenzol ist. Das Nutschgut wird im Vakuumtrockenschrank bei 100° über Nacht getrocknet.

Ausbeute: 168 Teile Nuance: goldorange

Beispiel 7

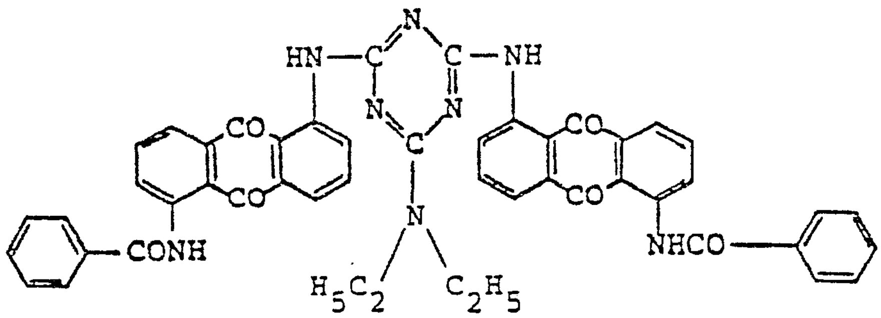

47,6 Teile 1,5-Diaminoanthrachinon werden in 600 Teilen destilliertem Nitrobenzol bei Raumtemperatur suspendiert. Die Suspension wird auf 140° erwärmt, und 22,1 Teile 2,4-Dichlor-6—diäthylamino-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 2 Stunden bei 140 bis 145° gerührt. Anschliessend werden 0,8 Teile Pyridin zugegeben, und es wird weitere 2 Stunden gerührt. Die Reaktionsmischung wird auf 80° abkühlen gelassen, und es werden 40 Teile Benzoylchlorid und 0,8 Teile Pyridin zugegeben. Dann wird die Reaktionsmischung aufgeheizt, 2 Stunden bei 140 bis 145° gerührt, dann auf 70 bis 80° abkühlen gelassen und filtriert. Der Rückstand wird gut abgesaugt und mit Aethanol gewaschen bis der Ablauf kein Nitrobenzol mehr enthält. Das Nutschgut wird im Vakuumtrockenschrank bei 100° über Nacht getrocknet.

Ausbeute: 78 Teile Nuance: goldorange

Beispiel 8

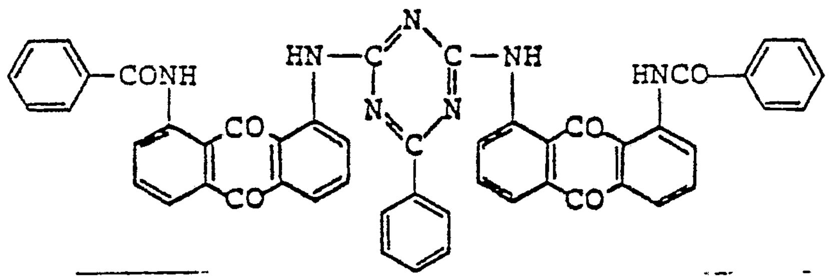

47,6 Teile 1,8-Diaminoanthrachinon werden in 600 Teilen destilliertem Nitrobenzol bei Raumtemperatur suspendiert. Die Suspension wird auf 140° erwärmt, und 22,6 Teile 2,4-Dichlor-6-phenyl-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 3 Stunden bei 140 bis 145° gerührt. Anschliessend wird 1 Teil Pyridin zugegeben, und es wird weitere 2 Stunden gerührt. Die Reaktionsmischung wird auf 80° abkühlen gelassen, und es werden 40 Teile Benzoylchlorid und 1 Teil Pyridin zugegeben. Dann wird die Reaktionsmischung aufgeheizt, 2 Stunden bei 140 bis 145° gerührt, dann auf 70 bis 80° abkühlen gelassen und filtriert. Der Rückstand wird gut abgesaugt und mit Aethanol gewaschen, bis der Ablauf kein Nitrobenzol mehr enthält. Das Nutschgut wird im Vakuumtrockenschrank bei 100° über Nacht getrocknet.

Ausbeute: 78 Teile Nuance: orange

Beispiel 9

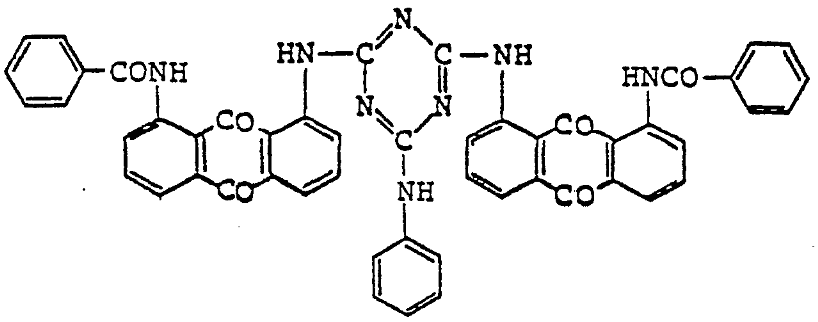

47,6 Teile 1,8-Diaminoanthrachinon werden in 600 Teilen destilliertem Nitrobenzol bei Raumtemperatur suspendiert. Die Suspension wird auf 140° erwärmt, und 24,1 Teile 2,4-Dichlor-6-phenylamino-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 2 Stunden bei 140 bis 145° gerührt. Anschliessend werden 0,8 Teile Pyridin zugegeben, und es wird weitere 2 Stunden gerührt. Die Reaktionsmischung wird auf 80° abkühlen gelassen, und es werden 40 Teile Benzoylchlorid und 0,8 Teile Pyridin zugegeben. Dann wird die Reaktionsmischung aufgeheizt, 2 Stunden bei 140 bis 145° gerührt, dann auf 70 bis 80° abkühlen gelassen und filtriert. Der Rückstand wird gut abgesaugt und mit Aethanol gewaschen, bis der Ablauf kein Nitrobenzol mehr enthält. Das Nutschgut wird im Vakuumtrockenschrank bei 100° über Nacht getrocknet.

Ausbeute: 79 Teile Nuance: orange

Beispiel 10

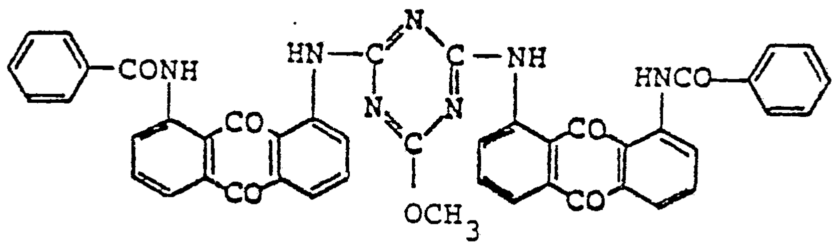

47,6 Teile 1,8-Diaminoanthrachinon werden in 600 Teilen destilliertem Nitrobenzol bei Raumtemperatur suspendiert. Die Suspension wird auf 140° erwärmt, und 18,0 Teile 2,4-Dichlor-6-methoxy-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 2 Stunden bei 140 bis 145° gerührt. Anschliessend wird 1 Teil Pyridin zugegeben, und es wird weitere 2 Stunden gerührt. Die Reaktionsmischung wird auf 80° abkühlen gelassen, und es werden 40 Teile Benzoylchlorid und 1 Teil Pyridin zugegeben. Dann wird die Reaktionsmischung aufgeheizt, 2 Stunden bei 140 bis 145° gerührt, dann auf 70 bis 80° abkühlen gelassen und filtriert. Der Rückstand wird gut abgesaugt und mit Aethanol gewaschen, bis der Ablauf kein Notrobenzol mehr enthält. Das Nutschgut wird im Vakuumtrockenschrank bei 100° über Nacht getrocknet.

Ausbeute: 76 Teile Nuance: orange

Beispiel 11

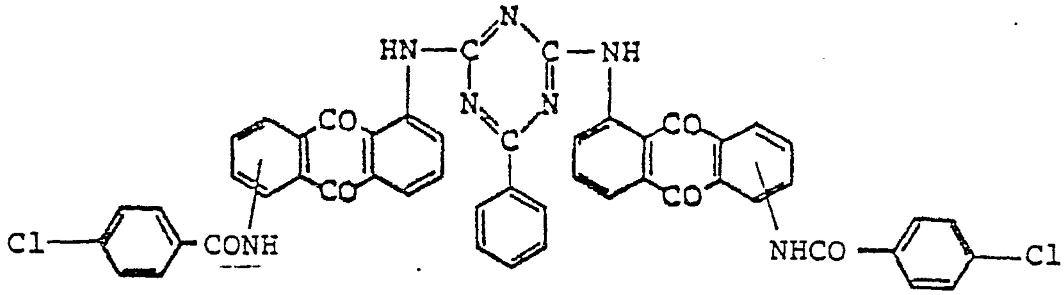

95,2 Teile einer Mischung von 62 Teilen 1,8-Diaminoanthrachinon, 1,42 Teilen 1,5-Diaminoanthrachinon, 14 Teilen 1,7-Diaminoanthrachinon, 3,28 Teilen 1,6-Diaminoanthrachinon, 0,76 Teilen β-Isomere und 0,56 Teilen 1-Aminoanthrachinon, werden in 1200 Teilen destilliertem Nitrobenzol bei Raumtemperatur suspendiert. Die Suspension wird auf 140° erwärmt, und 45,2 Teile 2,4-Dichlor-6-phenyl-s-triazin in 480 Teilen destilliertem Nitrobenzol gelöst werden im Laufe von 4 Stunden unter Einleiten von Stickstoff in die Reaktionsmischung bei 140 bis 145° zutropfen gelassen. Dann wird weitere 2 Stunden bei 140 bis 145° gerührt, anschliessend 2 Teile Pyridin zugegeben und weitere 2 Stunden gerührt. Nach Abkühlen der Reaktionsmischung auf 80° werden 90 Teile 4-Chlorbenzoylchlorid und 2 Teile Pyridin zugegeben. Die Reaktionsmischung wird erneut aufgeheizt und 3 Stunden lang bei 140 bis 145° gerührt. Nachdem die Reaktionsmischung auf 70 bis 80° abgekühlt ist wird filtriert. Der Rückstand wird gut abgesaugt und mit Aethanol gewaschen bis der Ablauf frei von Nitrobenzol ist. Das Nutschgut wird im Vakuumtrockenschrank bei 100° über Nacht getrocknet.

Ausbeute: 162 Teile          Nuance: gelborange

Beispiel 12

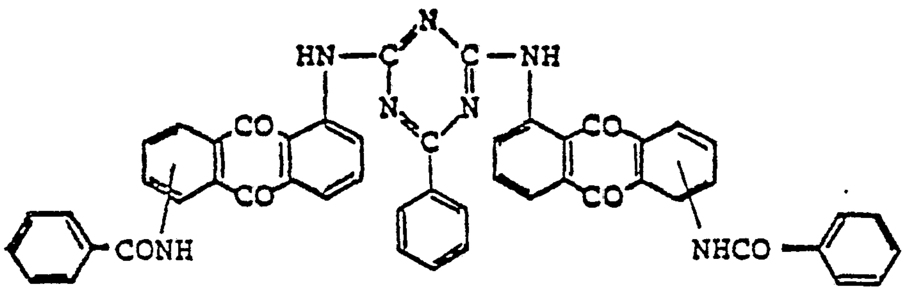

47,6 Teile einer Mischung von 18,5 Teilen 1,6-Diaminoanthrachinon, 11,5 Teilen 1,8-Diaminoanthrachinon, 8,3 Teilen 1,7-Diaminoanthrachinon, 3,2 Teilen 1,5-Diaminoanthrachinon, 1,2 Teilen 2,6-Diaminoanthrachinon, 1,3 Teilen 2,7-Diaminoanthrachinon, 0,7 Teilen 1-Aminoanthrachinon, 0,3 Teilen 2-Aminoanthrachinon und 2,6 Teilen Amino-hydroxyanthrachinon, werden in 600 Teilen destilliertem Nitrobenzol bei Raumtemperatur suspendiert. Die Suspension wird auf 140° erwärmt, und 22,6 Teile 2,4-Dichlor-6-phenyl-s-triazin in 240 Teilen destilliertem Nitrobenzol gelöst werden im Laufe von 4 Stunden unter Einleiten von Stickstoff bei 140 bis 145° in die Reaktionsmischung eintropfen gelassen. Dann wird weitere 2 Stunden bei 140 bis 145° gerührt. Anschliessend wird 1 Teil Pyridin zugegeben, und es wird weitere 2 Stunden gerührt. Die Reaktionsmischung wird auf 80° abkühlen gelassen und es werden 40 Teile Benzoylchlorid und 1 Teil Pyridin zugegeben. Dann wird die Reaktionsmischung aufgeheizt, 3 Stunden bei 140 bis 145° gerührt, dann auf 70 bis 80° abkühlen gelassen und filtriert. Der Rückstand wird gut abgesaugt und mit Aethanol gewaschen bis der Ablauf kein Nitrobenzol mehr enthält. Das Nutschgut wird im Vakuumtrockenschrank bei 100° über Nacht getrocknet.

Ausbeute: 70 Teile    Nuance: gelbbraun

Beispiel 13

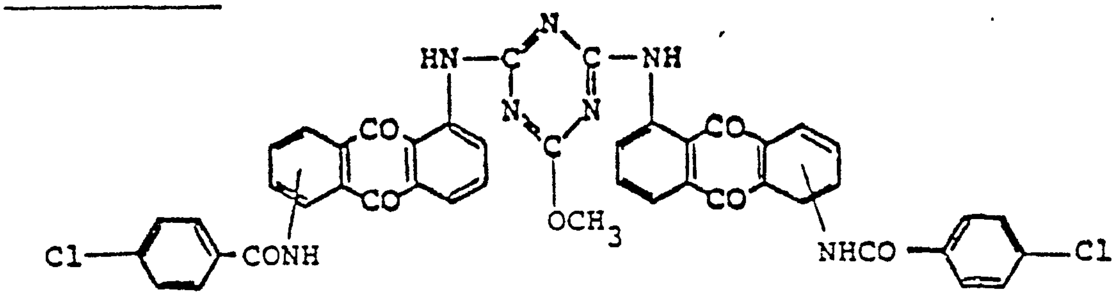

95,2 Teile einer Mischung von 37 Teilen 1,6-Diaminoanthrachinon, 23 Teilen 1,8-Diaminoanthrachinon, 16,6 Teilen 1,7-Diaminoanthrachinon, 6,4 Teilen 1,5-Diaminoanthrachinon, 2,4 Teilen 2,6-Diaminoanthrachinon, 2,6 Teilen 2,7-Diaminoanthrachinon, 1,4 Teilen 1-Aminoanthrachinon, 0,6 Teilen 2-Aminoanthrachinon und 5,2 Teilen Amino-hydroxyanthrachinon werden in 1200 Teilen destilliertem Nitrobenzol bei Raumtemperatur suspendiert. Die Suspension wird auf 140° erwärmt, und 36,0 Teile 2,4-Dichlor-6-methoxy-s-triazin in 480 Teilen destilliertem Nitrobenzol gelöst werden im Laufe von 4 Stunden unter Einleiten von Stickstoff in die Reaktionsmischung bei 140 bis 145° zutropfen gelassen. Dann wird weitere 2 Stunden bei 140 bis 145° gerührt, anschliessend 1 Teil Pyridin zugegeben und weitere 2 Stunden gerührt. Nach Abkühlen der Reaktionsmischung auf 80° werden 90 Teile 4-Chlorbenzoylchlorid und 1 Teil Pyridin zugegeben. Die Reaktionsmischung wird erneut aufgeheizt und 3 Stunden lang bei 140 bis 145° gerührt. Nachdem die Reaktionsmischung auf 70 bis 80° abgekühlt ist wird filtriert. Der Rückstand wird gut abgesaugt und mit Aethanol gewaschen bis der Ablauf frei von Nitrobenzol ist. Das Nutschgut wird im Vakuumtrockenschrank bei 100° über Nacht getrocknet.

Ausbeute: 148 Teile    Nuance: gelbbraun

Nach den in den Beispielen 1 bis 13 beschriebenen Verfahren können weitere Küpenfarbstoffe der Formel

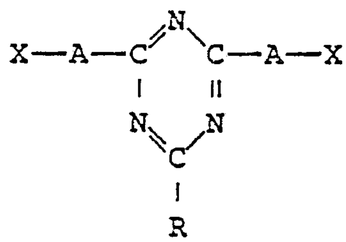

hergestellt werden, worin X, A und R die in der folgenden Tabelle angegebenen Bedeutungen haben.

| Bei-spiel Nr. | A | X | R | auf Baumwolle |
|---|---|---|---|---|
| 14 | 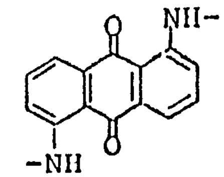 | 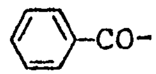 | 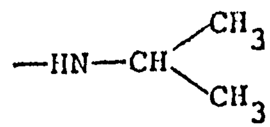 | Orange |
| 15 | " | " | 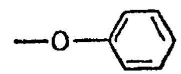 | " |
| 16 | " | 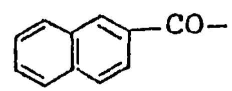 | 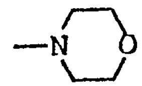 | " |
| 17 | 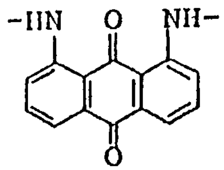 | 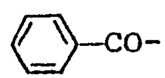 | 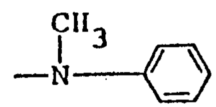 | " |
| 18 | " | " | $-HN-(CH_2)_2-OH$ | " |
| 19 | " | " | 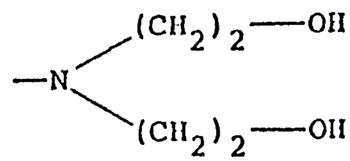 | " |
| 20 | " | 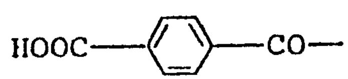 | 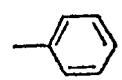 | Gelb |
| 21 | " | 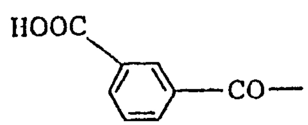 | 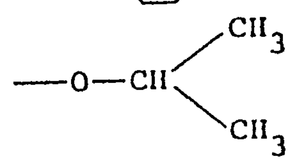 | Orange |

Tabelle (Fortsetzung)

| Bei-spiel Nr. | A | X | R | Nuance auf Baumwolle |
|---|---|---|---|---|
| 22 | 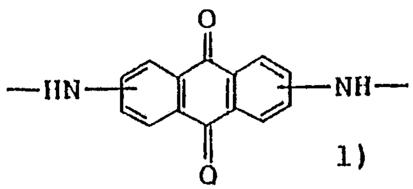 1) | 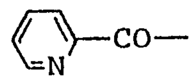 | $-NH(CH_2)_3-CH_3$ | Orange |
| 23 | " | " | $-O-CH_3$ | " |
| 24 | " | " | 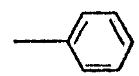 | " |
| 25 | 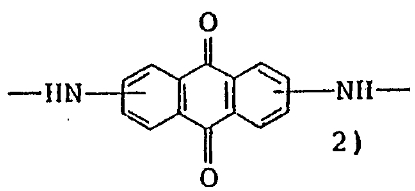 2) | " | 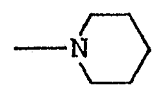 | Braungelb |
| 26 | " | " | 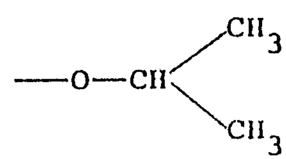 | " |

| Bei- spiel Nr. | A | X | R | Nuance auf Baumwolle |
|---|---|---|---|---|
| 27 | 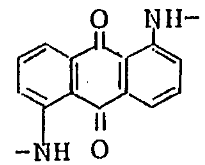 | 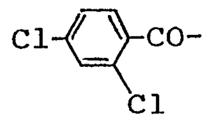 | 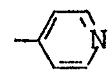 | Orange |
| 28 | " | 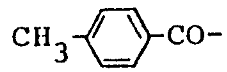 | $-CH_3$ | " |
| 29 | " | $ClCH_2-CO-$ | 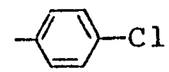 | " |
| 30 | 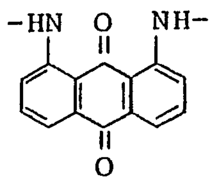 | 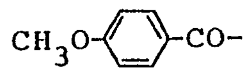 | 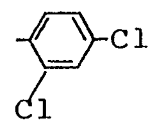 | " |
| 31 | " | 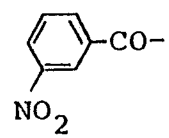 | 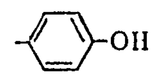 | " |
| 32 | " | 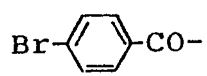 | 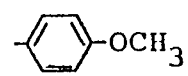 | " |
| 33 | " | $CH_3CH_2-CO-$ | 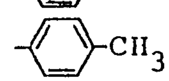 | " |
| 34 | " | 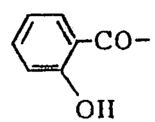 | 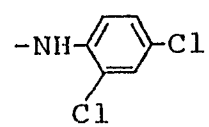 | " |

Tabelle (Fortsetzung)

| Beispiel Nr. | A | X | R | Nuance auf Baumwolle |
|---|---|---|---|---|
| 35 | 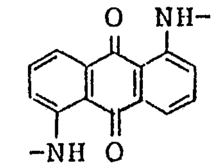 | 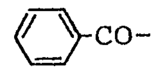 | 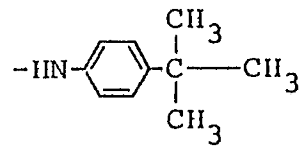 | Orange |
| 36 | " | " | 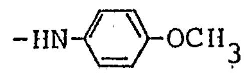 | " |
| 37 | " | 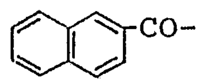 | 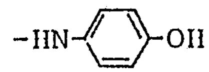 | " |
| 38 | 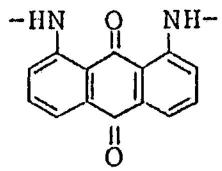 | 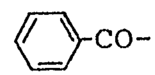 | 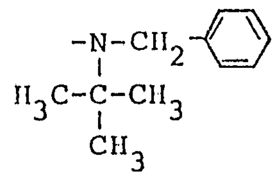 | " |
| 39 | " | " | 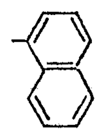 | " |
| 40 | " | " | 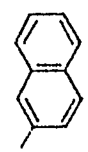 | " |
| 41 | " | " | 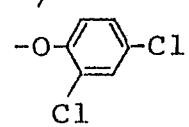 | " |
| 42 | " | " | 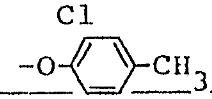 | " |

1) eine Mischung von

31,2 Teilen 1,8-Diaminoanthrachinon,
7,1 Teilen 1,5-Diaminoanthrachinon,
7,0 Teilen 1,7-Diaminoanthrachinon,
1,64 Teilen 1,6-Diaminoanthrachinon,
0,38 Teilen β-Isomere und
0,28 Teilen 1-Aminoanthrachinon.

2) eine Mischung von

18,5 Teilen 1,6-Diaminoanthrachinon,
11,5 Teilen 1,8-Diaminoanthrachinon,
8,3 Teilen 1,7-Diaminoanthrachinon,
3,2 Teilen 1,5-Diaminoanthrachinon,
1,2 Teilen 2,6-Diaminoanthrachinon,
1,3 Teilen 2,7-Diaminoanthrachinon,
0,7 Teilen 1-Aminoanthrachinon,
0,3 Teilen 2-Aminoanthrachinon und
2,6 Teilen Aminohydroxy-anthrachinon.

Färbevorschrift I

1 Teil des gemäss Beispiel 1 erhaltenen Farbstoffs wird mit 10 Vol.-Teilen Natronlauge von 36°Bé und 5 Teilen Natriumhydrosulfit in 200 Teilen Wasser bei 50 bis 70° verküpt. Einem Färbebad, das in 2000 Teilen Wasser 5 Vol.-Teile Natronlauge von 36°Bé und 3,7 Teile Natriumhydrosulfit enthält, gibt man die obige Stammküpe zu und geht bei 40° mit 100 Teilen Baumwolle ein. Nach 10 Minuten gibt man 15 Teile Natriumchlorid zu, nach 20 Minuten weitere 15 Teile und färbt bei 40° während 45 Minuten. Hierauf wird die Baumwolle abgequetscht, oxydiert und wie üblich fertiggestellt.

Färbevorschrift II

1 Teil des gemäss Beispiel 1 erhaltenen Farbstoffs und 0,5 Teile C.I. Dispersionsgelb 84 werden mit 2,5 Teilen einer 50%igen wässrigen Lösung des Natriumsalzes der Dinaphthylmethandisulfonsäure nass vermahlen. Mit diesem Farbstoffpräparat, 2 Teilen Ammonsulfat und 1000 Teilen Wasser stellt man eine Flotte her und bringt deren pH-Wert mit Hilfe von Mononatriumphosphat auf 6,0 bis 6,9.

In dieses Bad geht man mit 100 Teilen eines Mischgewebes aus Baumwolle und Polyester (67% PE) ein und erwärmt innert 45 Minuten auf 120 bis 125°. Man färbt 60 Minuten in geschlossenem Gefäss bei dieser Temperatur, lässt auf 60 bis 70° abkühlen und gibt 20 Vol.-Teile Natronlauge von 36°Bé und 5 Teile Natriumhydrosulfit zu. Nach 45 Minuten wird das Gewebe abgequetscht, oxydiert und wie üblich fertiggestellt. Man erhält ein gelb gefärbtes Mischgewebe.

Pigmentfärbung

5 Teile des gemäss Beispiel 1 erhaltenen Farbstoffs werden mit 95 Teilen Dioctylphthalat vermischt und in einer Kugelmühle solange vermahlen, bis die Farbstoffteilchen kleiner als 3 µ sind.

0,8 Teile dieser Dioctylphthalatpaste werden mit 13 Teilen Polyvinylchlorid, 7 Teilen Dioctylphthalat und 0,1 Teilen Cadmiumstearat vermischt und hierauf 5 Minuten auf dem Zweiwalzenstuhl bei 140° ausgewalzt. Man erhält ein gelb gefärbtes Material mit guten Migrationseigenschaften und guter Lichtechtheit.

Lackfärbung

10 g Titandioxyd und 2 g des gemäss Beispiel 1 erhaltenen Farbstoffes werden mit einer Mischung von 26,4 g Kokoslakydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine klare rote Lackierung, die sich bei guter Farbstärke durch eine gute Wetterechtheit auszeichnet.

PATENTANSPRÜCHE

1. Verfahren zur Herstellung von Küpenfarbstoffen der Formel

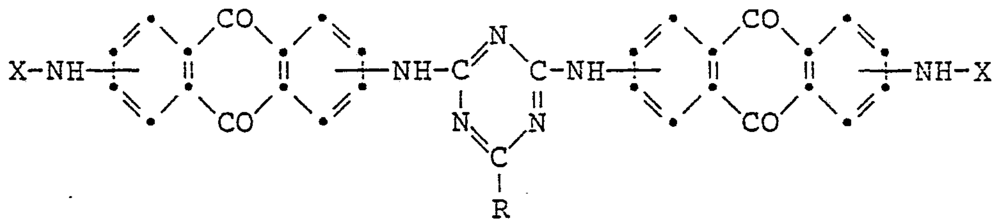

(1),

worin R einunsubstituierter oder substituierter Alkyl- oder Alkoxyrest mit 1 bis 6 Kohlenstoffatomen, ein unsubstituierter oder substituierter Phenoxy- oder Naphthoxyrest, ein unsubstituierter oder substituierter Rest der Benzol-, Naphthalin- oder Pyridinreihe, ein unsubstituierter oder substituierter Benzyl-, Phenäthyl- oder Mehtylennaphthylrest, ein unsubstituierter oder substituierter Morpholin- oder Piperidinrest oder ein unsubstituierter oder substituierter Aminorest ist, und X ein unsubstituierter oder substituierter Acylrest einer aliphatischen Carbonsäure mit 1 bis 6 Kohlenstoffatomen oder einer aromatischen Carbonsäure der Benzol-, Naphthalin-, Pyridin- oder Anthrachinonreihe ist, dadurch gekennzeichnet, dass man ein Diaminoanthrachinon der Formel

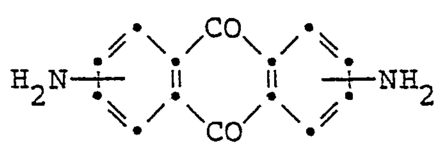

(2),

mit einem 2,4-Dihalogen-s-triazin der Formel

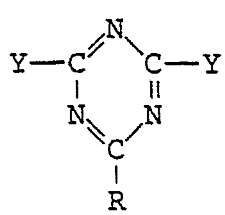

(3),

worin Y Halogen ist und R die unter Formel (1) angegebene Bedeutung hat, im molaren Verhältnis 2:1 kondensiert und

das erhaltene Zwischenprodukt der Formel

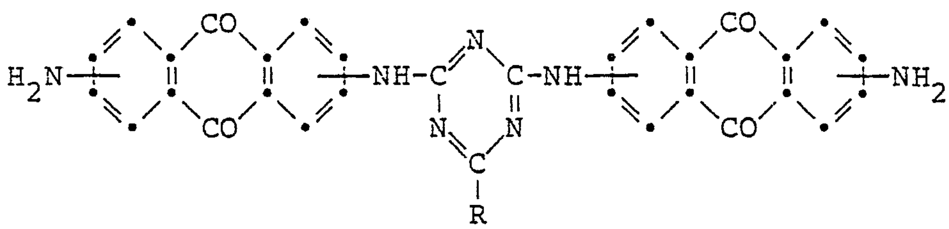
(4),

mit einem Acylierungsmittel, welches den Acylrest X, der die unter Formel (1) angegebene Bedeutung hat, aufweist, im molaren Verhältnis 1:2 kondensiert.

2. Verfahren gemäss Anspruch 1, dadurch gekennzeichnet, dass man 2,4-Dihalogen-s-triazine der Formel (3) verwendet, worin R ein unsubstituierter oder substituierter Alkyl- oder Alkoxyrest mit 1 bis 6 Kohlenstoffatomen, ein unsubstituierter oder durch Halogen oder Alkyl mit 1 bis 6 Kohlenstoffatomen substituierter Phenoxyrest, ein unsubstituierter oder durch Halogen, Hydroxy, Alkyl mit 1 bis 5 Kohlenstoffatomen oder Alkoxy mit 1 bis 6 Kohlenstoffatomen substituierter Rest der Benzol-, Naphthalin- oder Pyridinreihe, ein unsubstituierter Morpholin- oder Piperidinrest oder ein Aminorest ist, der durch unsubstituiertes oder durch Hydroxy substituiertes Alkyl mit 1 bis 6 Kohlenstoffatomen, Benzyl oder durch unsubstituiertes oder durch Halogen, Hydroxy, Alkyl mit 1 bis 6 Kohlenstoffatomen oder Alkoxy mit 1 bis 6 Kohlenstoffatomen substituiertes Phenyl mono- oder voneinander unabhängig disubstituiert ist, und dass man Acylierungsmittel verwendet, worin X ein unsubstituierter oder durch Halogen substituierter Acylrest einer aliphatischen Carbonsäure mit 1 bis 6 Kohlenstoffatomen oder ein unsubstituierter oder durch Halogen, Nitro, Hydroxy, Carboxy, Alkyl mit 1 bis 6 Kohlenstoffatomen oder Alkoxy mit 1 bis 6 Kohlenstoffatomen substituierter Acylrest einer aromatischen Carbonsäure der Benzol-, Naphthalin- oder Pyridinreihe ist.

3. Verfahren gemäss Anspruch 2, dadurch gekennzeichnet, dass man als Acylierungsmittel unsubstituiertes oder durch Chlor, Brom, Nitro, Hydroxy, Methyl, Methoxy oder Carboxy substituiertes Benzoylchlorid, Benzoylbromid, Benzoylfluorid, Benzoesäureanhydrid, Naphthoylchlorid, Naphthalin-1-carbonsäureanhydrid, Propionsäurechlorid, Chloressigsäurechlorid, Nikotinsäurechlorid oder Picolinsäurechlorid und als 2,4-Dihalogen-s-triazin der Formel (3) das 2,4-Dichlor-6-phenyl (oder 4'-chlorphenyl, 2',4'-dichlorphenyl, 4'-hydroxyphenyl, 4'-methoxyphenyl, 4'-toluyl, naphthyl, 4'-pyridyl, methyl, isopropoxy, methoxy, phenoxy, 4'-methylphenoxy, 2',4'-dichlorphenoxy, N,N-diäthylamino, phenylamino, isopropylamino, N-methyl-N-phenylamino, β-hydroxyäthylamino, N,N-di-β-hydroxyäthylamino, 2',4'-dichlorphenylamino, 4'-methoxyphenylamino, 4'-hydroxyphenylamino, 4'-isopropylphenylamino, N-isopropyl-N-benzylamino, n-butylamino, morpholino oder piperidino) -s-triazin verwendet.

4. Verfahren gemäss einem der Ansprüch 1 bis 3, dadurch gekennzeichnet, dass man die Umsetzungen der Verbindungen der Formel (2) mit einem 2,4-Dihalogen-s-triazin der Formel (3) und einem Acylierungsmittel, welches den Acylrest X aufweist, bei erhöhter Temperatur und vorzugsweise in einem interten organischen Lösungsmittel oder in Mischungen von inerten organischen Lösungsmitteln ausführt.

5. Verfahren gemäss Anspruch 4, dadurch gekennzeichnet, dass man als inerte organische Lösungsmittel Nitrobenzol oder o-Dichlorbenzol verwendet.

6. Verfahren gemäss einem der Ansprüche 1 bis 5, dadurch gekennzeichnet, dass man das Acylierungsmittel zusammen mit einem Kondensationskatalysator in die Reaktionsmischung gibt.

7. Verfahren gemäss Anspruch 1 oder 5, dadurch gekennzeichnet, dass man bei erhöhter Temperatur das Dihalogen-s-triazin in einem inerten organischen Lösungsmittel gelöst, mit geringer Geschwindigkeit zu der Lösung oder Suspension des Diaminoanthrachinons in einem inerten organischen Lösungsmittel zugitbt, anschliessend, wenn alles Dihalogen-s-triazin zugegeben ist und die Kondensation nahezu vollstänidg ist, einen Kondensationskatalysator zufügt und die Kondensation abschliesst und zuletzt das Acylierungsmittel gegebenenfalls zusammen mit einem Kondensationskatalysator in die Reaktionsmischung gibt und die Kondensation zu Ende führt.

8. Die nach den Verfahren gemäss einem der Ansprüche 1 bis 7 erhaltenen Küpenfarbstoffe.

9. Verfahren gemäss den Beispielen.

10. Die nach dem Verfahren gemäss den Beispielen erhaltenen Küpenfarbstoffe.

11. Verwendung der nach den Verfahren gemäss einem der Ansprüche 1 bis 7 erhaltenen Küpenfarbstoffe zum Färben und Bedrucken.

12. Verwendung der nach dem Verfahren gemäss den Beispielen erhaltenen Küpenfarbstoffe zum Färben und Bedrucken.

13. Das nach den Ansprüchen 11 und 12 erhaltene gefärbte und bedruckte Material, insbesondere Textilmaterial.

14. Färbe- und Druckpräparate, welche nach den Verfahren gemäss einem der Ansprüche 1 bis 7 erhaltene Küpenfarbstoffe enthalten.

Europäisches Patentamt

# EUROPÄISCHER RECHERCHENBERICHT

Nummer der Anmeldung
EP 80 10 5054

| Kategorie | EINSCHLÄGIGE DOKUMENTE – Kennzeichnung des Dokuments mit Angabe, soweit erforderlich, der maßgeblichen Teile | betrifft Anspruch | KLASSIFIKATION DER ANMELDUNG (Int Cl ) |
|---|---|---|---|
| | FR - A - 2 415 127 (CIBA-GEIGY) * Ansprüche 1-8 * | 1-7 | C 09 B 1/46<br>D 06 P 1/24 |
| | -- | | |
| | DE - A - 2 018 331 (CIBA) * Ansprüche 1-27 * | 1 | |
| D | & FR - A - 2 039 381 | | |
| | -- | | |
| A | CH - A - 449 154 (CIBA) * Beispiel 7 * | 1 | **RECHERCHIERTE SACHGEBIETE (Int Cl )** |
| | -- | | C 09 B 1/46<br>1/36 |
| A | FR - A - 1 178 224 (COMP. FRANC. MAT. COLORANTES) * Zusammenfassung; Beispiel 2 * | 1 | |
| | -- | | |
| A | FR - A - 2 215 451 (CIBA-GEIGY) * Ansprüche 1-12 * | 1 | |
| | -- | | |
| A | FR - A - 1 519 103 (CIBA) * Zusammenfassung * | 1 | |
| | -- | | |
| A | CH - A - 411 183 (CIBA) * Ansprüche und Unteransprüche * | 1 | |
| | ----- | | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-12-1980 | DELANGHE |